# EUROPEAN PATENT APPLICATION

(11) **EP 2 830 024 A1**
(43) Date of publication of application: **28.01.2015**
(21) Application number: 12872164.4
(22) Date of filing: 22.03.2012
(51) Int. Cl.: G07D 7/00, G06K 9/20, G06K 9/34, G06K 9/36

(54) **SYSTEM FOR READING PAPER SHEET SERIAL NUMBER, AND METHOD FOR READING PAPER SHEET SERIAL NUMBER**

(71) Applicant: Glory Ltd., Himeji-shi, Hyogo 670-8567 (JP)
(72) Inventor: GOTO, Masanori, Himeji-shi Hyogo 670-8567 (JP); KUROIWA, Motoko, Himeji-shi Hyogo 670-8567 (JP); KADONO, Takashi, Himeji-shi Hyogo 670-8567 (JP)
(74) Representative: Driver, Virginia Rozanne
(86) International application number: PCT/JP2012/057298
(87) International publication number: WO 2013/140563

(57) **Abstract**

A system for reading a paper sheet serial number, for reading a serial number assigned to a paper sheet using a paper sheet image, is comprised of: a paper sheet conveyance unit for conveying a paper sheet; a paper sheet identification sensor unit for acquiring a paper sheet image of the paper sheet being conveyed by the paper sheet conveyance unit and identifying a type of the paper sheet using the paper sheet image; a memory unit in which a number extraction condition including position information of a plurality of serial numbers included in the paper sheet image, and character font identification information including information relating to a font and character type of each serial number are associated with the type of paper sheet and stored; and a character recognition unit for referencing the memory unit on the basis of the type of paper sheet identified by the paper sheet identification sensor unit, extracting a character image of each digit of a serial number from the paper sheet image on the basis of the number extraction condition, and recognizing a character of each character image using corresponding template data on the basis of the character font identification information.

## Description

### TECHNICAL FIELD

The present invention relates to a paper sheet serial number reading system and a paper sheet serial number reading method for reading a serial number printed on a paper sheet from a paper sheet image formed by capturing an image of the paper sheet. The present invention more particularly relates to a paper sheet serial number reading system and a paper sheet serial number reading method capable of reading serial numbers of various types of paper sheets.

### BACKGROUND ART

Paper sheet serial number reading systems that read serial numbers printed on a paper sheet are known in the art. The serial number is a serial (identification) number printed on a paper sheet to identify the paper sheet and includes plural digits containing a character string constituted by a combination of alphanumeric characters, for example.

For example, Patent Document 1 discloses an apparatus that recognizes the denomination of banknotes by reading serial numbers printed on the banknotes. This apparatus denominates banknotes by using that fonts used in a banknote as a processing object differ for each denomination.

Fonts of numeric characters and alphabetical characters used in a serial number have been previously stored as master data for each denomination, and a serial number image printed on a banknote is compared with the master data to identify the font of the serial number. Then the denomination of the banknote is recognized based on the identified font.

Patent Document 2 discloses an apparatus that reads serial numbers from banknotes of various countries. The serial numbers of banknotes of various countries can be read by performing character recognition process based on the size, orientation, and the like of the serial numbers printed on the banknotes. Moreover, information about whether any serial number printed in a font different from that of other serial numbers is included in the banknote has been previously stored as font identification information, and it is determined whether any serial number printed in a font different from that of other serial numbers exists among the serial numbers read from the banknotes. Then the results of determination are used in a banknote authentication process.

### [Conventional Art Documents]

### [Patent Documents]

[Patent Document 1] Japanese Patent Application Laid-Open No. 11-025313
[Patent Document 2] International Publication No. 2009/040922

### DISCLOSURE OF INVENTION

### PROBLEMS TO BE SOLVED BY THE INVENTION

However, in conventional techniques, although it can be determined whether a font of a serial number is different by using a part of characters included in the serial number, not all the characters constituting the serial number can be precisely read in some cases.

A typical serial number reading process is carried out, for example, by extracting partial images including characters of each digit of the serial number from a banknote image obtained by capturing an image of the banknote, as character images each including one character, and then by comparing each character image with previously prepared template data for character recognition. In order to use the result of determination for recognition processing of recognizing the denomination and the like of banknotes, if it is necessary to only determine whether any character printed in a font different from that of other characters is included in a serial number, the determination can be performed by carrying out character recognition on only a part of the characters included in the serial number; however, in the serial number reading processing, it is necessary to perform character recognition for all the digits of the serial number. Accordingly, it is necessary to precisely extract the character images of each digit of the serial number in the serial number reading processing.

A typical character image extraction process is carried out, for example, by identifying the position of the serial number by scanning a serial number image with a combination of frames of a predetermined size (a character frame), which include only one character in the inside thereof, i.e., with a combination of all such frames (an arrangement pattern frame) for all the digits of the serial number generated by matching an arrangement position of each digit of the serial number, and then by extracting partial images included in each character frame. However, the character size and the character spacing of the character in each digit of the serial number may vary in some banknotes due to the font and the like used for the serial number. If the character size and the character spacing are variable, it is difficult to extract character images by simply determining the position of a serial number by applying character frames or arrangement pattern frames.

If the character recognition process is carried out on each of a plurality of the serial numbers printed on a banknote and if results of the character recognition on each serial number do not match one another, the results obtained by the character recognition may be determined as misrecognitions in some cases. Accordingly, if character recognition cannot be carried out for any of plural serial numbers because each character image could not be precisely extracted, then even if precise results of character recognition have been obtained for another serial number, the final result may be determined as misrecognitions.

The present invention has been made in order to solve the above-described problems in the conventional techniques, and an object of the present invention is to provide a paper sheet serial number reading system and a paper sheet serial number reading method capable of precisely extracting character images of each character constituting a serial number and reading the serial number.

### MEANS TO SOLVE THE PROBLEMS

To solve the above problems and to achieve the above objects, according to one aspect of the present invention, there is provided a paper sheet serial number reading system that reads a serial number printed on a paper sheet by using a paper sheet image and includes a paper sheet transporting unit that transports a paper sheet; a paper sheet recognition sensor unit that acquires a paper sheet image of the paper sheet transported by the paper sheet transporting unit and recognizes a type of the paper sheet by using the paper sheet image; a memory unit in which number extraction conditions including position information of plural serial numbers included in the paper sheet image and character font recognition information including information related to a font and a character type of each serial number are stored in association with the types of the paper sheets; and a character recognition unit that extracts character images of each digit of the serial number from the paper sheet image on the basis of the number extraction condition by referring to the memory unit on the basis of the type of the paper sheet recognized by the paper sheet recognition sensor unit and performs character recognition on each character image by using corresponding template data on the basis of the character font identification information.

According to another aspect of the present invention, in the paper sheet serial number reading system, when a serial number of which at least one of the font and the character type is different is included in the serial numbers included in the paper sheet image, the character recognition unit performs character recognition on each serial number on the basis of the character font identification information by using template data generated by using a corresponding font and character type.

According to still another aspect of the present invention, in the paper sheet serial number reading system, a first serial number in which printing of a specific character has been omitted and a second serial number in which the specific character has been printed without omitting are included in the paper sheet image, and the paper sheet serial number reading system further includes a collation unit that compares and collates, when the specific character is included in a result of character recognition on the second serial number as a result of the character recognition performed by the character recognition unit, results of character recognition on the first serial number and the second serial number after performing a process of complementing the result of character recognition on the first serial number by adding the specific character to the result.

According to still another aspect of the present invention, in the paper sheet serial number reading system, when at least one of a character size and a character position varies for different characters in plural digits adjacent to each other in the serial number included in the paper sheet image, the character recognition unit extracts an image included in each character frame by determining a position of the serial number by applying an arrangement pattern frame constituted by one character frame, which is set for the digits so as to include all characters in the digits even if the position and the size of the character varies for different characters in each digit of the digits, and another character frame set for other digits so as to include characters in the other digits only, separates an image extracted by applying one character frame set for the digits into images for each digit and performs character recognition on each obtained image as the character image.

According to still another aspect of the present invention, in the paper sheet serial number reading system, the character recognition unit specifies a pixel having a minimum luminance value among plural pixels arranged in a direction perpendicular to an arrangement direction of the digits, from an image extracted by applying one character frame set for the digits, and specifies a boundary between characters on the basis of variation of the minimum luminance value in a direction parallel to the arrangement direction of the digits, and separates each character from another.

According to still another aspect of the present invention, in the paper sheet serial number reading system, when at least one of a character size and a character position varies for different characters in plural digits adjacent to each other in the serial number included in the paper sheet image, the character recognition unit extracts an image included in each character frame by determining a position of the serial number by applying an arrangement pattern frame constituted by one character frame set for the digits so as to include all characters in the digits even if the position and the size of the character vary for different characters in each digit of the digits, and another character frame set for other digits so as to include characters in the other digits only, and performs character recognition on the image extracted by applying one character frame set for the digits by using template data previously generated in correspondence with the number of digits of the digits.

According to still another aspect of the present invention, there is provided a paper sheet serial number reading system that reads a serial number printed on a paper sheet by using a paper sheet image and includes a paper sheet transporting unit that transports a paper sheet; a paper sheet recognition sensor unit that acquires a paper sheet image of the paper sheet being transported by the paper sheet transporting unit and recognizes a type of the paper sheet by using the paper sheet image; a memory unit in which number extraction conditions including information related to a position of plural serial numbers included in the paper sheet image and information related to an arrangement pattern frame for which positions of characters in each digit of a serial number having a largest number of digits among serial numbers, which are possibly included in the paper sheet have been set, and information related to template data to be used for character recognition of each serial number have been stored in association with the types of the paper sheets; and a character recognition unit that extracts character images of each digit of the serial number from the paper sheet image on the basis of the number extraction condition by referring to the memory unit on the basis of the type of the paper sheet recognized by the paper sheet recognition sensor unit and performs character recognition on each character image by using corresponding template data on the basis of the information related to the template data, wherein the character recognition unit determines a position of the serial number by applying the arrangement pattern frame stored in the memory unit, determines whether a character is included at a character position of each digit of the serial number at the determined position of the serial number, and extracts each character image at the character position having been determined to include a character.

According to still another aspect of the present invention, there is provided a paper sheet serial number reading method for reading a serial number printed on a paper sheet by using a paper sheet image including transporting a paper sheet by using a paper sheet transporting unit; recognizing a paper sheet by a paper sheet recognition sensor unit by acquiring a paper sheet image of the transported paper sheet and recognizing a type of the paper sheet by using the paper sheet image; reading information, by referring to a memory unit on the basis of the type of the paper sheet recognized by the paper sheet recognition sensor unit, including a number extraction condition that includes information related to a position of plural serial numbers included in the paper sheet image, and character font recognition information that includes information related to a font and a character type of each serial number; extracting character images of characters of respective digits of the serial number from the paper sheet image on the basis of the number extraction condition; and performing character recognition on each character image extracted at said extracting character images by using corresponding template data on the basis of the character font identification information.

According to still another aspect of the present invention, in paper sheet serial number reading method, at said performing, when a serial number having at least one of the font and the character type different is included in the serial numbers included in the paper sheet image, each serial number is recognized by character recognition performed on the basis of the character font identification information by using template data generated by using a corresponding font and a character type.

According to still another aspect of the present invention, in paper sheet serial number reading method, a first serial number in which printing of a specific character has been omitted and a second serial number in which the specific character has been printed without omitting are included in the paper sheet image, and the paper sheet serial number reading method further includes collating serial numbers by comparing and collating results of character recognition on the first serial number and the second serial number after performing a process of complementing the result of character recognition on the first serial number by adding the specific character thereto when the specific character is included in the result of character recognition on the second serial number as a result of the character recognition at said performing character recognition.

According to still another aspect of the present invention, in paper sheet serial number reading method, said extracting character image includes determining a position of a serial number included in the paper sheet image, when at least one of a character size and a character position varies for different characters in plural digits adjacent to each other in the serial number, by applying an arrangement pattern frame constituted by one character frameset for the digits so as to include all characters in the digits even if the position and the size of the characters vary for different characters in each digit of the digits, and another character frame set for other digits so as to include characters in the other digits only; extracting partial images included in each character frame at the position determined at said determining a position of a serial number; and separating a partial image extracted at said extracting partial images, by applying one character frame set for the plurality of digits, into images for each digit and titling each obtained image a character image.

According to still another aspect of the present invention, in paper sheet serial number reading method, said separating further includes determining a boundary between characters on the basis of variation of the minimum luminance value in a direction parallel to the arrangement direction of the plurality of digits by determining a pixel having a minimum luminance value among plural pixels arranged in a direction perpendicular to an arrangement direction of the digits, from an image extracted by applying one character frame set for the digits.

According to still another aspect of the present invention, in paper sheet serial number reading method, said extracting character images includes determining a position of a serial number, when at least one of a character size and a character position varies for different characters in plural digits adjacent to each other in the serial number included in the paper sheet image, by applying an arrangement pattern frame constituted by one character frame set for the digits so as to include all characters in the digits even if the position and the size of the character vary for different characters in each digit of the digits, and another character frame set for other digits so as to include characters in the other digits only; and extracting partial images included in each character frame at the position determined at said determining a position of a serial number, and the performing character recognition includes performing character recognition on the partial image extracted at said extracting partial images by applying one character frame set for the digits by using template data previously generated in correspondence with the number of digits of the digits.

According to still another aspect of the present invention, there is provided a paper sheet serial number reading method for reading a serial number printed on a paper sheet by using a paper sheet image including transporting a paper sheet by using a paper sheet transporting unit; recognizing a paper sheet, by using a paper sheet recognition sensor unit, by acquiring a paper sheet image of the transported paper sheet and recognizing a type of the paper sheet by using the paper sheet image; reading information, by referring to a memory unit on the basis of the type of the paper sheet recognized by the paper sheet recognition sensor unit, including a number extraction condition that includes information related to a position of plural serial numbers included in the paper sheet image, and information related to an arrangement pattern frame for which positions of characters in each digit of a serial number having a largest number of digits among serial numbers, which are possibly included in the paper sheet have been set, and information related to template data to be used for character recognition of each serial number; extracting a serial number image from the paper sheet image on the basis of the number extraction condition; determining a position of the serial number on the serial number image by applying the arrangement pattern frame information; determining whether a character is included at each position of each character in the digits of the serial number in the determined position of the serial number; extracting each character image from the position for which it has been determined that a character is included; and performing character recognition on each extracted character image by using corresponding template data.

### ADVANTAGES OF THE INVENTION

According to the present invention, even if serial numbers of different fonts and character types are printed by a type of banknotes, character recognition can be performed by precisely extracting character images of characters of respective digits of the serial numbers by using information previously set in accordance with the type of the banknotes and also by using templates generated with corresponding fonts and character types, and accordingly, serial numbers of various banknotes can be read.

In addition, according to the present invention, even if plural serial numbers using different fonts and character types have been printed on one banknote, character recognition can be precisely performed by precisely extracting character images of the character in each digit of the serial numbers and by using corresponding template data.

In addition, according to the present invention, due to the difference in the character type, even if any specific character has been printed in one serial number and not in the other serial number on one banknote, a result of the character recognition on one serial number can be complemented with the specific character. Accordingly, the results of the character recognition on the two serial numbers are prevented from being determined as misrecognitions determining that the results of the character recognition on them are different from each other as a result of the comparison and collation between them.

In addition, according to the present invention, even if the position and the size of the characters vary for plural digits constituting a serial number, the position of the serial number can be determined by setting one character frame so as to include the characters for the plurality of digits and by applying an arrangement pattern frame including the character frame, and if plural characters are included in the image obtained from the characters within one character frame, character images of the characters of respective digits of the serial number can be extracted by separating the characters from one another, and accordingly, character recognition on each character image can be precisely performed by using the corresponding template data.

In addition, according to the present invention, if plural characters are included in the image obtained from characters in one character frame, images of each character can be extracted by identifying a pixel having the lowest luminance value among those of plural pixels arranged in a direction perpendicular to an arrangement direction of the characters, identifying a boundary between the characters on the basis of variation of the minimum luminance value in the arrangement direction of the characters, and separating the characters from one another, and accordingly, character recognition on each character image can be precisely performed by using the corresponding template data.

In addition, according to the present invention, even if plural characters are included in the image obtained from characters included in one character frame, character recognition on the plurality of characters can be performed by using template data previously prepared in accordance with the plurality of characters without carrying out the process of extracting each character from the image.

In addition, according to the present invention, even if it is possible that serial numbers of different number of digits are printed, character images of characters in each digit can be extracted in accordance with the number of digits of each serial number, and accordingly, character recognition on each character image can be precisely performed by using the corresponding template data.

### BRIEF DESCRIPTION OF DRAWINGS

FIG. 1 is a block diagram illustrating a functional configuration of a paper sheet handling apparatus according to an embodiment of the present invention;
FIGS. 2A to 2C are drawings illustrating an image used in serial number reading processing according to the present embodiment;
FIGS. 3A and 3B are drawings illustrating an example of serial numbers printed in different fonts on one banknote;
FIGS. 4A and 4B are drawings illustrating an example of serial numbers printed in different types of characters on one banknote;
FIGS. 5A and 5B are drawings illustrating another example of serial numbers printed in different types of characters on one banknote;
FIGS. 6A and 6B are drawings illustrating examples of serial numbers having different number of digits printed on banknotes of the same type;
FIGS. 7A to 7D are drawings illustrating examples of serial numbers having different character sizes and character spacing for different characters included in the serial number;
FIGS. 8A to 8C are drawings illustrating a character frame and an arrangement pattern frame used in serial number reading processing for reading the serial number illustrated in FIGS. 7A to 7D;
FIG. 9 is a drawing illustrating another example of the character frame and the arrangement pattern frame;
FIGS. 10A and 10B are drawings illustrating a method of determining the position of a serial number by applying an arrangement pattern frame;
FIGS. 11A and 11B are drawings illustrating a method of evaluating the position of the arrangement pattern frame by using pixel values;
FIGS. 12A to 12C are drawings illustrating a method of separating one character from another when plural characters are included in one character frame;
FIGS. 13A and 13B are drawings illustrating an example of a character frame and an arrangement pattern frame used in serial number reading processing for reading serial numbers having different number of digits;
FIGS. 14A and 14B are drawings illustrating results of character recognition performed on the serial number illustrated in FIG. 5;
FIG. 15 is a drawing illustrating a method of determining whether any character is included in a character frame;
FIG. 16 is a flowchart of a processing procedure of the serial number reading processing; and
FIG. 17 is a flowchart of a processing procedure of the character recognition process performed on serial numbers.

### DETAILED DESCRIPTION OF EMBODIMENTS

Exemplary embodiments of a paper sheet serial number reading system and a paper sheet serial number reading method according to the present invention are explained in detail below with reference to the accompanying drawings. The present invention can be applied generally to paper sheets such as banknotes, checks, bills, and vouchers; however, in the present embodiment, an example will be described in which a serial number printed on a banknote is read by a paper sheet handling apparatus that functions as a paper sheet serial number reading system.

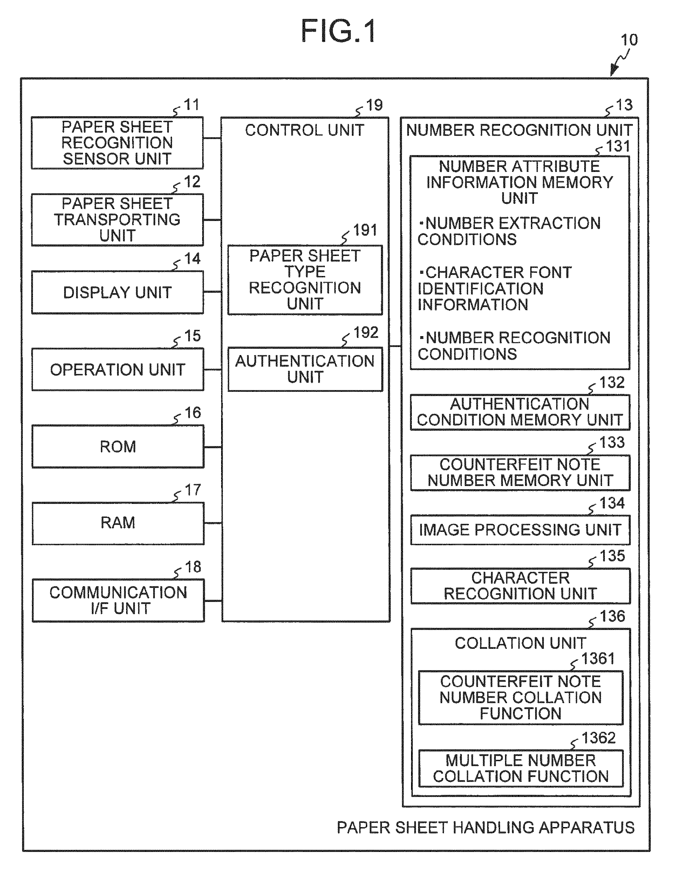

FIG. 1 is a block diagram illustrating a functional configuration of a paper sheet handling apparatus 10 according to the present embodiment. The paper sheet handling apparatus 10 includes a paper sheet recognition sensor unit 11, a paper sheet transporting unit 12, a number recognition unit 13, a display unit 14, an operation unit 15, a read only memory (ROM) 16, a random access memory (RAM) 17, a communication interface (hereinafter, "I/F") unit 18, and a control unit 19.

The paper sheet recognition sensor unit 11 has a function of acquiring banknote images of front and back surfaces of a banknote, which is inserted into the paper sheet handling apparatus 10, by using an optical reading unit such as a line sensor to read a serial number of the banknote. An actual paper sheet handling apparatus 10 is provided with a thickness sensor that determines the thickness of a banknote, an authentication sensor such as a magnetic sensor, and an ultraviolet (UV) sensor, and various types of banknote recognition sensors in addition to the paper sheet recognition sensor unit 11; however, only the configurations necessary for explaining serial number reading process will be described in the present embodiment and illustration and explanation of other configurations will be omitted herefrom.

The paper sheet transporting unit 12 has a function of transporting a banknote inserted in the apparatus from outside. The banknote transported by the paper sheet transporting unit 12 undergoes recognition by the number recognition unit 13, and paper sheet type recognition unit 191 and authentication unit 192 of the control unit 19 that are explained later, and is then transported into a storage unit (not shown) based on the results of recognition.

On a banknote that has been denominated based on a banknote image acquired by the paper sheet recognition sensor unit 11, the number recognition unit 13 performs an image process of recognizing a serial number based on a command received from the control unit 19 and also performs a character recognition process and a collation process on the serial number by using the image-processed images. The recognition results and the collation results are input to the control unit 19. The number recognition unit 13 includes a number attribute information memory unit 131, an authentication condition memory unit 132, counterfeit note number memory unit 133, an image processing unit 134, a character recognition unit 135, and a collation unit 136. The number recognition unit 13 can be configured so that a computer program that implements later-explained functions is written on the ROM 16, the computer program is expanded on the RAM 17, and the expanded program is executed by a central processing unit (CPU). Alternatively, the number recognition unit 13 can also be implemented on a field programmable gate array (FPGA) and the like in order to speed up a part of the processing.

Information for performing character recognition on an extracted serial number and information necessary for performing authentication of a recognized serial number have been stored in the number attribute information memory unit 131 as number attribute information. Number extraction conditions including information about the position, the extraction size, and the like of a serial number for each denomination, character font identification information including information about the character type and the font of characters constituting a serial number, and number recognition conditions including processing conditions and the like necessary for performing the character recognition process by extracting character images of each digit of the serial number have been stored as the number attribute information.

An authentication condition, which is a determination condition for determination processing related to a serial number of a banknote, has been stored in the authentication condition memory unit 132. The authentication condition includes information about the denomination and the like of a banknote to be recognized. The authentication condition is set by inputting it by using the operation unit 15 and the display unit 14 or via the communication I/F unit 18. A serial number of a banknote determined as a counterfeit note and a serial number of a counterfeit note input by a user (counterfeit note serial number) are stored in the counterfeit note number memory unit 133.

The image processing unit 134 refers to the number extraction condition stored in the number attribute information memory unit 131 based on the results of denomination recognition including information about the denomination, the orientation, and the like of the banknote input from the control unit 19, and extracts a partial image including the serial number from the banknote image acquired by the paper sheet recognition sensor unit 11 as a serial number image. Moreover, the image processing unit 134 performs various image processing as necessary, which includes processes of adjusting the brightness and contrast of the image, a process of changing the rotation and size of the image.

The character recognition unit 135 performs character recognition processing by using the serial number image obtained by the image processing unit 134. The character recognition processing is the process performed by extracting character images of each digit constituting a serial number from a serial number image and comparing the extracted character image with previously prepared template data, and the character recognition processing will be described in detail later below.

The collation unit 136 includes a counterfeit note number collation function 1361 and a multiple number collation function 1362, and performs a collation process and the like for authenticating the banknote by using the serial number recognized by the character recognition unit 135. The counterfeit note number collation function 1361 is a function for determining whether the banknote is a counterfeit note or not by collating the serial number recognized by the character recognition unit 135 with the counterfeit note serial numbers stored in the counterfeit note number memory unit 133. In addition, the multiple number collation function 1362 performs collation among serial numbers recognized by the character recognition at multiple locations on the banknote on the basis of the number recognition condition stored in the number attribute information memory unit 131 to determine whether the character recognition results match one another.

The display unit 14 includes a liquid crystal display and the like, and has a function of displaying various information such as operation information, processing information including the number of processed banknotes and the total sum of money, status information about the apparatus, to an operator of the paper sheet handling apparatus 10. The operation unit 15 is also used in performing an operation for controlling the processing and operation performed by the paper sheet handling apparatus 10.

The ROM 16 is used for storing a control program related to the operation of the paper sheet handling apparatus 10 and information (i.e., reference characteristic information, a recognition program, and the like) used in recognizing a banknote in the control unit 19 by using various types of banknote recognition sensors. The RAM 17 is used as a temporary work area used in performing various processing in the paper sheet handling apparatus 10.

The communication I/F unit 18 has a function of communicating with an external apparatus such as an information processing terminal via a communication line. For example, the communication I/F unit 18 is used to connect the paper sheet handling apparatus 10 and a host apparatus. Thus, the number attribute information stored in the number attribute information memory unit 131, the authentication condition stored in the authentication condition memory unit 132, and the counterfeit note serial number stored in the counterfeit note number memory unit 133, for example, can be set from the host apparatus.

The control unit 19 controls each processing unit including the paper sheet recognition sensor unit 11, the paper sheet transporting unit 12, the number recognition unit 13, the display unit 14, the operation unit 15, the ROM 16, and the RAM 17. In addition, the control unit 19 includes the paper sheet type recognition unit 191, which recognizes the denomination on the basis of information about a reflection image and the like acquired by the paper sheet recognition sensor unit 11, and the authentication unit 192, which performs authentication of the banknote of the denomination recognized by the paper sheet type recognition unit 191. The paper sheet type recognition unit 191 determines the orientation and the denomination of the banknote by using the reflection image acquired from the paper sheet recognition sensor unit 11. The authentication unit 192 performs authentication of the banknote on the basis of the information acquired by the paper sheet recognition sensor unit 11 and the results of the processing related to the serial number acquired by the number recognition unit 13.

With the above configuration, the paper sheet handling apparatus 10 is capable of reading serial numbers of various banknotes. Now, processing after acquisition of banknote images by the paper sheet recognition sensor unit 11 up to character recognition of serial numbers included in the banknote images performed by the number recognition unit 13 will be described below.

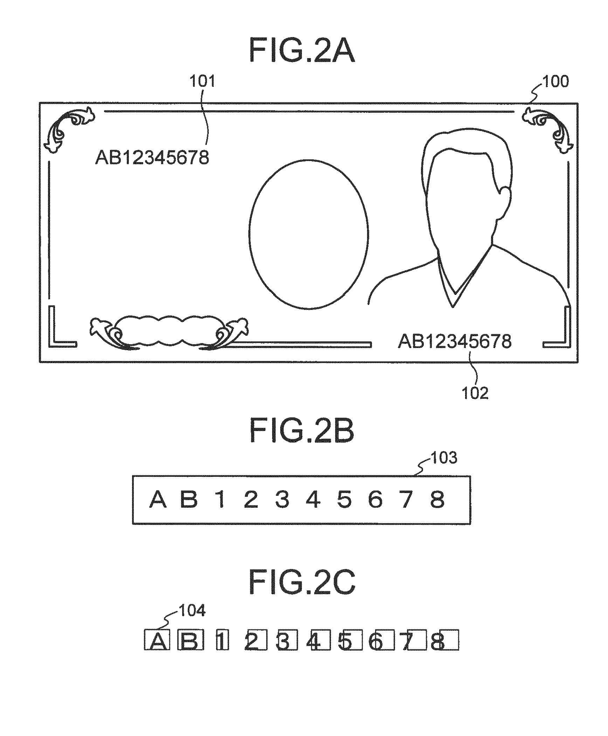

FIGS. 2A to 2C are drawings illustrating an example of a banknote image 100, a serial number image 103, and a character image 104 used by the paper sheet handling apparatus 10. The paper sheet recognition sensor unit 11 captures a banknote image 100 including a left-side serial number 101 and a right-side serial number 102 as illustrated in FIG. 2A. The image processing unit 134 refers to the number extraction condition stored in the number attribute information memory unit 131 on the basis of the results of denomination recognition by the paper sheet type recognition unit 191 and determines the position of the left-side serial number 101 and the right-side serial number 102. Then, the image processing unit 134 extracts partial images including each of the left-side serial number 101 and the right-side serial number 102. FIG. 2B is a drawing illustrating an example of the serial number image 103 extracted in the above manner. Subsequently, the character recognition unit 135 extracts character images 104 of characters in each digit constituting the serial number from the serial number image 103 as illustrated in FIG. 2C. The example in FIGS. 2A to 2C illustrates a case where the two serial numbers 101 and 102 have been printed in the left and the right portions of the banknote in the same character type and the same font. However, according to the issuing country and the denomination of the banknote, the left-side serial number 101 and the right-side serial number 102 may be printed on the same banknote in different fonts and/or different character types in some cases. Examples of the banknotes of this type include dirham notes and the like issued by the United Arab Emirates (UAE).

The case where the serial numbers are printed in different fonts refers to a case, for example, where the same alphabetical character "A" is printed as characters of different designs in the left-side serial number 101 and the right-side serial number 102. Moreover, the case where the serial numbers are printed in different character types refers to a case, for example, where the left-side serial number 101 is printed in Roman alphabetic characters and Arabic numeric characters while the right-side serial number 102 is printed in Arabic alphabetic characters and Arabic and Indian numeric characters. In other words, these are the cases where the serial numbers are printed on the same banknote in different languages, such as English and Arabic.

In most cases, a serial number is constituted by a character string of multiple digits including a combination of alphabetical characters, symbols and numeric characters, and in some cases, serial numbers on the left and the right portions of the same banknote may be printed in different fonts or character types. Now, specific examples of the cases will be described below where the fonts and the character types of the serial numbers are different for the left-side serial number 101 and the right-side serial number 102 printed on the same banknote.

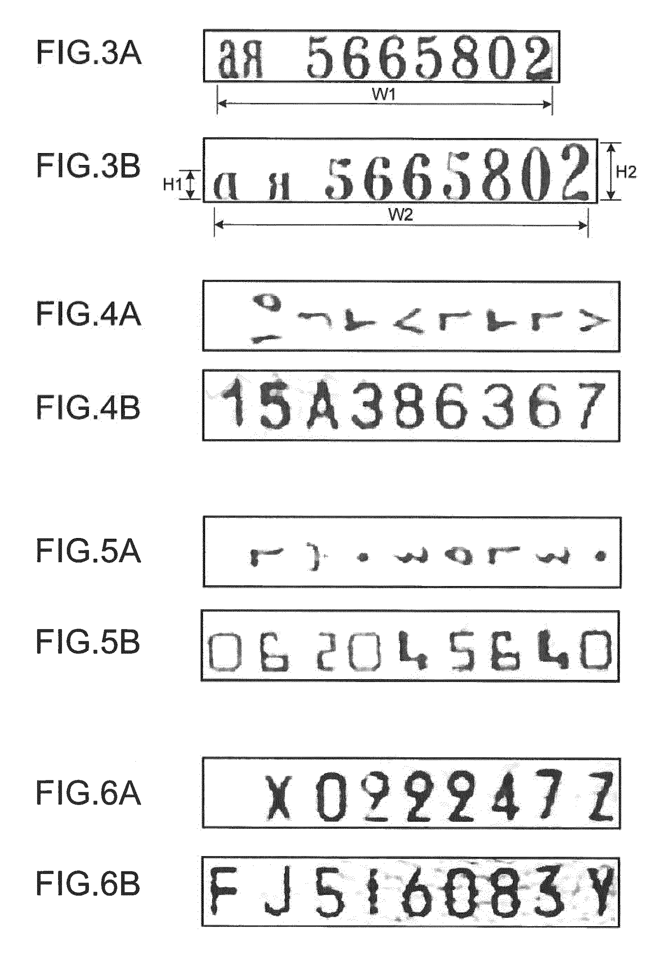

FIGS. 3A to 5B are drawings illustrating examples of serial number images obtained from the banknote image 100. These drawings illustrate serial number images of the left-side serial number 101 and the right-side serial number 102 extracted from one banknote image 100. FIGS. 3A, 4A, and 5A, respectively, illustrate a serial number image of the left-side serial number, and FIGS. 3B, 4B, and 5B, respectively, illustrate serial number image of the right-side serial numbers. It is assumed in the following explanation that the leftmost digit of each serial number is the highest order digit, i.e., the character in the leftmost digit is the first digit character. In addition, hereinafter, a mere expression "numeric character" refers to a numeric character from 0 to 9, while an expression "symbol" refers to a case where the character includes a character other than numeric characters, i.e., a character such as a Roman alphabetic character or a Cyrillic alphabetic character, and a symbol, such as a star mark. In addition, an expression "character" refers to a case where the character includes both a symbol and a numeric character regardless of the character type.

FIGS. 3A and 3B are drawings of an example where the left-side serial number illustrated in FIG. 3A and the right-side serial number illustrated in FIG. 3B are printed in different fonts. The serial number is constituted by symbols in the first and the second digits printed in Cyrillic characters and numeric characters in the third to ninth digits printed in Arabic numeric characters. Because the left-side and right-side serial numbers are printed in the same character type but in different fonts, the appearance of the portions including the first digit and the second digit in Cyrillic characters is greatly different from each other, and also the widths of the entire serial numbers are different from each other (W1<W2). Further, in the left-side serial number illustrated in FIG. 3A, the numeric characters for the seven digits have the same height, while in the right-side serial number, the height of the numeric characters gradually increases and thus the height of the character in the ninth digit of the serial number is greatly different from that of the character in the first digit (H1<H2).

FIGS. 4A and 4B are drawings illustrating an example where the left-side serial number as illustrated in FIG. 4A and the right-side serial number as illustrated in FIG. 4B are printed in different character types. In the left-side serial number of this banknote, the symbols are constituted by Arabic alphabetic characters and the numeric characters are constituted by Arabic and Indian numeric characters. In the right-side serial number, the symbol is constituted by a Roman alphabetic character and the numeric characters are constituted by Arabic numeric characters.

Similar to the example illustrated in FIGS. 4A and 4B, FIGS. 5A and 5B are drawings illustrating an example where the left-side and right-side serial numbers are printed in different character types. The left-side serial number illustrated in FIG. 5A is printed in Arabic and Indian numeric characters and Abjad numeric characters, while the right-side serial number illustrated in FIG. 5B is printed in Arabic numeric characters. The right-side serial number illustrated in FIG. 5B is expressed in Arabic numeric characters in nine digits. On the other hand, because the Abjad numerical system does not include "0" (zero), the same serial number is expressed in eight digits in the left-side serial number illustrated in FIG. 5A. Abjad numeric characters are used on dirham notes issued by the UAE, for example.

FIGS. 6A and 6B are drawings illustrating examples where serial numbers having different number of digits are printed on a banknote of the same type. In this banknote, two types of serial numbers constituted by different number of digits are used. Specifically, even on a banknote of the same type, because of differences in the year of issuance of the banknote and the like, the serial number is constituted by an 8-digit character string in some cases as illustrated in FIG. 6A, while the serial number is constituted by a 9-digit character string in other cases as illustrated in FIG. 6B.

As explained above, various serial numbers exist according to the types of banknotes, in which different fonts and character types are used for between the left-side and right-side serial numbers, the printed serial numbers include different number of digits, and the like. The paper sheet handling apparatus 10 is capable of precisely reading serial numbers printed on various banknotes including the exemplary serial numbers illustrated in FIGS. 3A to 6B. Specifically, the paper sheet handling apparatus 10 is capable of extracting character images of characters in each digit by separating them into character images each including one character from the serial number image illustrated in each of FIGS. 3A to 6B. Moreover, because the paper sheet handling apparatus 10 carries out the character recognition process on characters included in each character image by using previously prepared template data in correspondence with the fonts and the character types of the characters, the paper sheet handling apparatus 10 is capable of performing precise character recognition on the characters included in each character image. Now, a method of carrying out the character recognition process by extracting each character image from a serial number image will be explained below.

The Process of extracting each character image from the serial number image illustrated in FIGS. 3A and 3B will be explained first. The serial number illustrated in FIGS. 3A and 3B has a characteristic that the left-side and right-side serial numbers are printed in different fonts and also a characteristic that the character size and the character spacing differ for different Cyrillic characters included in the serial number.

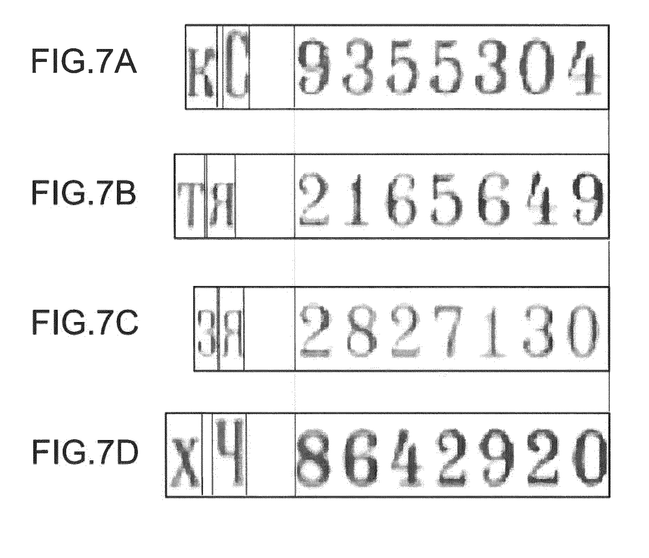

FIGS. 7A to 7D are drawings illustrating examples in which the character size and the character spacing differ for different Cyrillic characters included in the serial number. In the numeric characters in the third to the ninth digits, the width, the height, and the character spacing are the same for each character. On the other hand, with respect to the first and second digits, the width, the height, and the character spacing can be different for the first and second digits according to the Cyrillic characters.

Only the example of the left-side serial number illustrated in FIG. 3A is illustrated in FIGS. 7A to 7D; however, the width and height of the characters are different for different characters in the first and second digits also of the right-side serial number illustrated in FIG. 3B. Note that in the right-side serial number, the height of the numeric characters gradually increases from the character in the third digit toward the character in the ninth digit as illustrated in FIG. 3B. However, different numeric characters are not printed in different character sizes, i.e., the numeric characters "5" and "6" are printed with the height, which is not different from one numeric character to another, for example, and thus the characters in each digit are printed with the fixed height.

In the paper sheet handling apparatus 10, an arrangement pattern frame is applied to extract an image of each character constituting the serial number. The arrangement pattern frame is information, which defines the extraction position used in extracting a character image of each character constituting the serial number. Note that information about the arrangement pattern frame has been previously stored in the number attribute information memory unit 131 as one piece of information included in the number extraction condition.

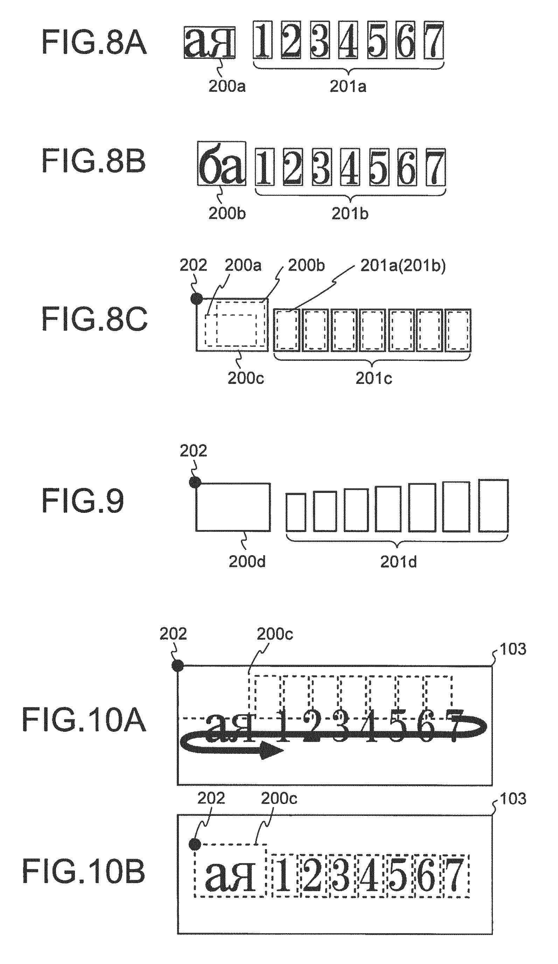

FIGS. 8A to 8C are drawings illustrating an arrangement pattern frame for the serial numbers illustrated in FIGS. 3A and 3B and 7A to 7D. In this serial number, the arrangement pattern frame is constituted, as illustrated in FIG. 8A, by a character frame 200a, which is set so as to include the Cyrillic characters for the first and second digits of the serial number, and seven character frames 201a, which are set so as to include each corresponding numeric character for each of the third to ninth digit, for example.

It is preferable that the arrangement pattern frames are set so that each of the arrangement pattern frames includes one of the characters in all the digits of the serial number. However, in the serial number illustrated in FIGS. 7A to 7D, the widths, the heights, and the character spacing of the characters in the first and second digits are different for different Cyrillic characters used in the serial number. In addition, the region, which can be occupied by the character for the first digit, and the region, which can be occupied by the character for the second digit, are partially overlapped on the banknote image. Therefore, the character frames for each digit cannot be set so that one character frame for a character in each digit includes one character each as in the case of the numeric characters in the third to ninth digits. In order to address this issue, one character frame is set for plural digits so that the two Cyrillic characters in the first and the second digits are included in one character frame.

Specifically, a character frame 200c for Cyrillic characters is set as illustrated in FIG. 8C so that the first and second Cyrillic characters are included in the character frame 200c regardless of the combination of the characters such as the character frame 200a for a Cyrillic character illustrated in FIG. 8A and the character frame 200b for a Cyrillic character illustrated in FIG. 8B. With respect to the numeric characters in the third to ninth digits, the character frame 201c is set so that the character frames 201a and 201b for each digit are included in the character frame 201c as illustrated in FIG. 8C. As explained above, the arrangement pattern frame is formed by the character frame 200c for the Cyrillic characters and the character frame 201c for the numeric characters.

In other words, if the size and the position of the characters changes at a position of a specific digit constituting the serial number from those of other characters, the character frame is set such that such a character is included inside the character frame regardless of the character to be printed, considering the sizes and the positions of all the characters used in the digits. Moreover, if any parts of the set character frames overlap with each other between adjacent digits, one character frame is set such that the character frames for the digits of both of the adjacent digits are included in this one character frame. In setting the character frame, the displacement of printing position of each character is considered in addition to the size and the region that can be occupied by each character.

For the right-side serial number illustrated in FIG. 3B also, an arrangement pattern frame is formed by a character frame 200d for the Cyrillic characters in the first and second digits and a character frame 201d for the numeric characters in the third to ninth digits as illustrated in FIG. 9. In this arrangement pattern frame, the height of each character frame 201d for the third to ninth digits is set in accordance with the height of the numeric character in each digit. As explained above, an arrangement pattern frame that corresponds to each of the left-side and right-side serial numbers is set and used.

The arrangement pattern frame is defined by the positional relationship of each character frame with an origin 202 set at the upper-left corner of the arrangement pattern frame and also by the width and the height of each character frame as illustrated in FIGS. 8C and 9. These pieces of information about the arrangement pattern frame have been stored as one of the number extraction conditions in the number attribute information memory unit 131 in association with the information about the type of the banknote.

In the paper sheet handling apparatus 10, after the country, which has issued the banknote and the denomination of the banknote have been recognized by the paper sheet type recognition unit 191 by using the banknote image acquired by the paper sheet recognition sensor unit 11, the image processing unit 134 refers to the number extraction condition stored in the number attribute information memory unit 131 according to the recognition results. Then, as illustrated in FIGS. 2A and 2B, the serial number image 103 including the serial number region is extracted from the banknote image 100 illustrated in FIG. 2A. In this case, if the banknote includes plural serial numbers, serial number images of each serial number are extracted. Moreover, image processes of rotating the serial number image and scaling the serial number image are carried out as necessary, and information about necessity of such processing and the processing contents are also included in the number extraction conditions.

If it is determined as a result of recognition that the banknote is a note on which a serial number including a Cyrillic character is printed as illustrated in FIGS. 3A and 3B and 7A to 7D, then the arrangement pattern frames illustrated in FIGS. 8C and 9 corresponding to the results are read out. After the serial number images and the arrangement pattern frames are obtained, the character recognition unit 135 searches for the position of the origin 202 at which the characters in each digit constituting the serial number as illustrated in FIG. 10B fall within the corresponding character frames of the arrangement pattern frame by scanning the corresponding arrangement pattern frame within the serial number image 103 as illustrated in FIG. 10A. The search for the location of the arrangement pattern frame is carried out by using a pixel value, for example. The pixel value used herein refers to a luminance value of the applicable pixel.

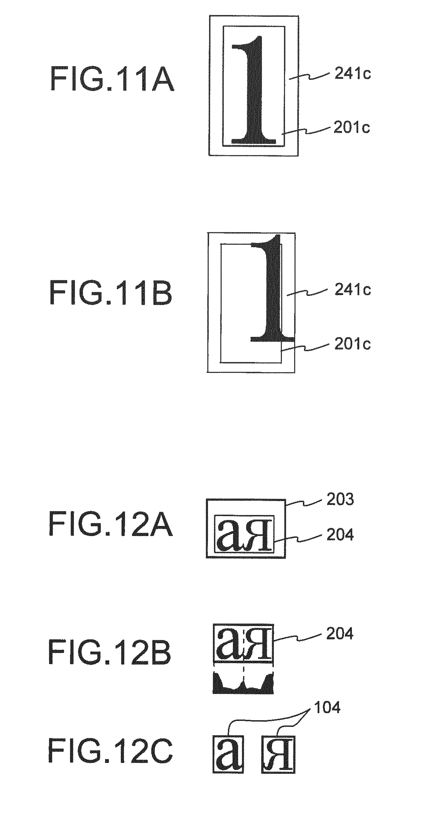

FIGS. 11A and 11B are drawings illustrating a method of evaluating an optimum position of the arrangement pattern frame based on the pixel value. A case where the arrangement pattern frame is evaluated to be at the optimum position is illustrated in FIG. 11A, and a case where the arrangement pattern frame is evaluated to be not at the optimum position is illustrated in FIG. 11B.

As illustrated in FIG. 11A, the character frame 201c, which is a rectangular region constituting the arrangement pattern frame, and a rectangular annular outer peripheral portion 241c, which is a strip region surrounding the outer periphery of the character frame 201c by a predetermined pixel width, are set and an average value of the total pixel values of all the pixels included in each of the character frame 201c and the outer periphery portion 241c is calculated. For example, if the character frame 201c is constituted by n pixels and if the total sum of the pixel values for the n pixels is Vc, then an average pixel value C for the character frame 201c is calculated by the following expression: C=Vc/n. In the similar manner, if the outer peripheral portion 241c is constituted by m pixels and if the total sum of the pixel values for the m pixels is Vf, then an average pixel value F for the outer peripheral portion 241c is calculated by the following expression: F=Vf/m. Moreover, a character frame evaluation value Ec for the character frame 201c is calculated on the basis of these values by using the following expression: Ec=F-C. By applying the character frame evaluation value Ec, it can be evaluated whether the character frame 201c has been set to an appropriate position in relation to the characters, which constitute the serial number, i.e., whether the arrangement pattern frame is at the optimum position.

Each character constituting a serial number is usually printed with pixels having pixel values lower than (i.e., pixels darker than) those of the surrounding portions, i.e., the characters are printed in black against the white background, for example. Accordingly, the average pixel value C for the character frame 201c and the average pixel value F for the outer peripheral portion 241c become smaller as the number of pixels constituting the characters becomes larger. If no character is included in the outer peripheral portion 241c, the average pixel value F for the outer peripheral portion 241c becomes large. Specifically, the average pixel value C has a minimum value if the character is entirely included in the character frame 201c as illustrated in FIG. 11A. On the other hand, if only a part of the character is included in the character frame 201c as illustrated in FIG. 11B, the average pixel value C becomes larger as the part of the character gone beyond the character frame 201c becomes larger. On the other hand, the average pixel value F becomes smaller if the character has gone beyond the character frame 201c and a part of the character exists in the outer peripheral portion 241c as illustrated in FIG. 11B, and if the character is entirely included in the character frame 201c as illustrated in FIG. 11A, the average pixel value F has a maximum value.

In other words, if the arrangement pattern frame is at the optimum position and if the character frame 201c is in the state illustrated in FIG. 11A, then the average pixel value C for the character frame 201c becomes minimum and the average pixel value F for the outer peripheral portion 241c becomes maximum. By using this characteristic, the character frame evaluation value Ec =F-C is calculated for each character frame 201c constituting the arrangement pattern frame, and it is evaluated with respect to each character frame whether the character is included within the frame. Then the total sum of the character frame evaluation values Ec for all the character frames is calculated, and it is evaluated, by using the total sum of the value Ec as the arrangement pattern frame evaluation value, whether the arrangement pattern frame is at the optimum position.

An example is explained above in which the characters constituting the serial number include pixels with pixel values lower than those of the surrounding portions (i.e., pixels darker than the surrounding portions) ; however, the present embodiment is not limited to this. For example, if the characters include pixels of which the pixel values are higher than (i.e., pixels lighter than) those of the surrounding portions, the optimum position for the arrangement pattern frame can be searched in the similar manner by using the character frame evaluation value Ec calculated by the following expression: Ec=C-F.

The arrangement pattern frame evaluation value is calculated at each position while moving the origin 202 inside the serial number image 103 as illustrated in FIG. 10A. In addition, the position of coordinates at which the evaluation value attains the maximum value is determined as the appropriate position for the arrangement pattern frame. At the optimum position, characters in each digit of the serial number are included within each character frame constituting a character pattern frame.

After the position of the origin 202 is determined as illustrated in FIG. 10B, each character image is extracted by applying each character frame constituting the arrangement pattern frame at this position. As a result, a partial image, which includes the Cyrillic characters in the first and second digits, and seven character images, which include each numeric character in the third to ninth digits, are extracted. Furthermore, processes of separating the characters in the first and second digits from each other are carried out for the partial image including the Cyrillic characters in the first digit and the second digit.

FIGS. 12A to 12C are drawings illustrating processes of separating and extracting each character image 104 from a partial image 203 including two Cyrillic characters. First, as shown in FIG. 12A, a margin region is deleted on the basis of the pixel values of each pixel constituting the partial image 203, and a rectangular partial image 204 including the two inscribed Cyrillic characters is extracted. Then, the position of the boundary for each character is determined on the basis of the minimum luminance value of the extracted partial image 204. Specifically, the luminance value of a pixel having the minimum luminance value among the pixels arranged in the vertical direction constituting the partial image is calculated as illustrated in FIG. 12B, and the calculated luminance value is plotted in the horizontal direction to generate a distribution diagram, which illustrates the variation of the minimum luminance value in the lateral direction. The minimum luminance value becomes low at a position where each character printed in black is included, while the value becomes high in the margin portion such as the space between the characters. On the basis of this, the boundary between characters is determined according to the variation of the minimum luminance value. Then, two character images 104 illustrated in FIG. 12C can be extracted by separating the image into two at the position of this boundary. The method of determining the boundary between the characters is not limited to the embodiment that uses the minimum luminance value, which is a luminance value of one pixel, and the method of determining the boundary can be a method in which the boundary is determined by using an average value of pixel values of plural pixels arranged in the vertical direction or by generating and using a histogram generated on the basis of the pixel values.

As explained above, the character recognition unit 135 extracts the partial image including two Cyrillic characters and character images including each numeric character from the banknote image by applying the arrangement pattern frame and further extracts the character images including each Cyrillic character from the partial image including the two Cyrillic characters. Thus, character images of the characters in each digit constituting the serial number can be obtained. An example of a case of the left-side serial number illustrated in FIG. 3A is explained above with reference to FIGS. 10A and 10B and 12A to 12C, and character images of the characters in each digit of the serial number can be extracted also from the right-side serial number illustrated in FIG. 3B by carrying out similar processes by applying the character pattern frame illustrated in FIG. 9.

After the character images each including one character only of the characters in each digit of the serial number are obtained in the above manner, the character recognition process is carried out in which each character image that is obtained is compared with template data previously prepared corresponding to each character constituting the serial number. In the number attribute information memory unit 131, information about the fonts and the character types of each character constituting the serial number and the correspondence thereof with the template data used in the character recognition processing have been stored as character font identification information. The character font identification information has been previously stored in association with the type of banknote.

If the serial number printed on a banknote is determined, by referring to the character font identification information, to be a serial number including Cyrillic characters, such as the serial numbers illustrated in FIGS. 3A and 3B and 7A to 7D, the character recognition unit 135 carries out the character recognition process, which uses the template data for Cyrillic characters with respect to the character images of the characters in the first and second digits, and the character recognition process, which uses a template data for numeric characters in the third to ninth digits. In this processing, the template data for the right-side serial number was generated on the basis of the character types and the fonts for the right-side serial number and the template data for the left-side serial number was generated on the basis of the character types and the fonts for the left-side serial number, and accordingly, the character recognition process can be precisely carried out for each serial number.

However, the character recognition method of recognizing the character image including two characters is not limited to this. For example, it is possible to employ a configuration in which the character recognition is carried out by handling two characters as one character. Specifically, after the partial image 204 including two characters is extracted by deleting the margin region from the partial image illustrated in FIG. 12A, character recognition is carried out on the partial image 204 including two characters as it is without separating the characters from each other or extracting images of them from the partial image 204. If template data including two characters is previously generated on the basis of the fonts and the character types of the characters in each digit of the serial number, two characters can be recognized by carrying out character recognition once by using the template data.

This configuration will be specifically explained with reference to an example of a case of Roman alphabetic characters. If images of characters in two adjacent digits printed in Roman alphabetic characters have been extracted by applying one character frame, character recognition is carried out on the frame including two characters instead of separating the image into images each including one character in one digit to perform character recognition on them by using one template for one character "A", "B", "C", or the like. Template data including a combination of two characters such as "AA", "AB", "AC", or the like has been previously generated in the font used for the serial number. Due to this, if two characters "AB" are included in the partial image 204, for example, the partial image 204 is compared as it is with the template data without separating it into two character images each including one character, and thus it can be recognized by the character recognition that the characters included in the partial image 204 are "AB".

If two Cyrillic characters are included in the partial image 203 as illustrated in FIG. 12A, for example, because 66 types of Cyrillic characters can be each digit of the serial number, 4,356 (=66×66) types of templates are prepared by using the font used in the serial number. With this configuration, character recognition can be carried out on two Cyrillic characters at the same time.

Next, processing for extracting each character image from the serial number image of the serial number illustrated in FIGS. 5A and 5B will be explained. In the serial numbers illustrated in FIGS. 5A and 5B, the left-side and right-side serial numbers have been printed in the different character types. Specifically, the same serial number has been printed in Abjad numeric characters and Arabic and Indian numeric characters in the left-side serial number, while in the right-side serial number, the same serial number is printed in Arabic numeric characters.

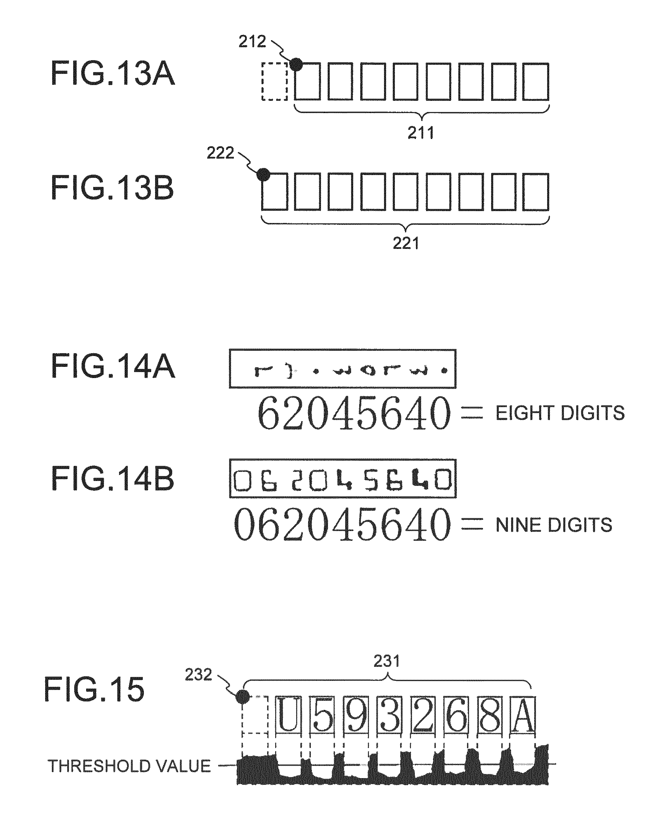

FIGS. 13A and 13B are drawings illustrating an arrangement pattern frame set for the serial numbers illustrated in FIGS. 5A and 5B. In the serial numbers illustrated in FIGS. 5A and 5B, the left-side serial number is constituted by characters in eight digits, and the right-side serial number is constituted by characters in nine digits. Accordingly, as illustrated in FIG. 13A, an arrangement pattern frame for the left-side serial number including a character frame 211 for eight digits is used for the left-side serial number. In addition, as illustrated in FIG. 13B, the arrangement pattern frame for the right-side serial number including a character frame 221 for nine digits is used for the right-side serial number. These arrangement pattern frames has been previously stored as the character extraction condition in the number attribute information memory unit 131 in association with the type of banknote.

If any serial number is used for the left-side serial number of which the first digit is not "0" (zero), then the arrangement pattern frame which includes the character frame for nine digits including the leftmost digit, i.e. , the arrangement pattern frame illustrated in FIG. 13A by a broken line, is used. If the left-side serial number is printed in eight digits or nine digits, processes of determining the number of digits of the serial number (eight or nine digits) are carried out after searching for the position of the serial number by applying the arrangement pattern frame including a character frame for nine digits illustrated in FIG. 13B. The above processing will be explained later below.

If it is determined as a result of denomination recognition performed by the paper sheet type recognition unit 191 that the banknote is a note on which the serial numbers illustrated in FIGS. 5A and 5B have been printed, then the arrangement pattern frames illustrated in FIGS. 13A and 13B are read out from the number attribute information memory unit 131.

Then, as explained above with reference to FIGS. 10A and 10B, the position of each serial number is searched by scanning an origin 212 of the arrangement pattern frame for the left-side serial number on the serial number image of the left-side serial number and by scanning an origin 222 of the arrangement pattern frame for the right-side serial number on the serial number image of the right-side serial number. After the position of each serial number is determined, each character image is extracted on the basis of each arrangement pattern frame.

After character images each including only one character in each digit is obtained with respect to each of the left-side serial number and the right-side serial number, the character recognition unit 135 carries out the character recognition process by using the template data corresponding to each character. The character recognition unit 135 refers to the character font identification information, carries out the character recognition process, which use the template data for Abjad numeric characters and Arabic and Indian numeric characters on the character images of the left-side serial number, and carries out the character recognition process, which uses the template data for Arabic numeric characters on the character images of the right-side serial number. Information about the corresponding template data has been previously stored as the character font identification information in the number attribute information memory unit 131 in association with the type of banknote.

As explained above, in the paper sheet handling apparatus 10, the template data for the character type corresponding to each serial number is used even if the serial numbers of different character types are printed on one banknote. In addition, character images each including only one character in each digit of the serial number are obtained and the character recognition process is carried out by using the character images, and accordingly, the character recognition process can be precisely carried out.

As illustrated in FIG. 14A, an 8-digit character string is obtained as a result of character recognition processing on the left-side serial number. On the other hand, the right-side serial number is recognized as a 9-digit character string illustrated in FIG. 14B. For this processing, in the paper sheet handling apparatus 10, in order to prevent the left-side serial number and the right-side serial number from being determined to be misrecognitions due to the difference in the number of digits in the results of character recognition obtained by comparing the left-side serial number and the right-side serial number, information for preventing this error has been previously stored in the number attribute information memory unit 131 in the number recognition conditions.

Specifically, in the case of a serial number of which the first digit is "0" (zero), a position corresponding to the first digit of the right-side serial number becomes blank in the left-side serial number, which has been printed in Abjad numeric characters without "0" (zero) as illustrated in FIG. 14A. On the other hand, 9-digit characters are recognized as a result of character recognition for the right-side serial number, which has been printed in Arabic numeric characters as illustrated in FIG. 14B. Accordingly, when comparing the results of character recognition on the left-side and right-side serial numbers, it is set to add a numeric character "0" (zero) before the first digit of the result of character recognition on the left-side serial number, which has been printed in Abjad numeric characters. In other words, in the paper sheet handling apparatus 10, even if the same serial number has been printed as plural serial numbers of different character types and if any serial number exists among these serial numbers in which printing of a specific character has been omitted, the serial number with the specific character omitted in the result of character recognition on the serial number can be completed. Due to this, the result of character recognition on the left-side serial number illustrated in FIG. 14A is determined to match the result of character recognition on the right-side serial number illustrated in FIG. 14B.

In this manner, in the paper sheet handling apparatus 10, the image processing unit 134 that extracts serial number images from the banknote image, and the character recognition unit 135 that extracts each character image from the serial number images and carries out character recognition, use the number extraction conditions, the character font identification information, and the number recognition conditions stored in the number attribute information memory unit 131, and accordingly, the process corresponding to the type of the banknote to be processed can be carried out.

Next, the processing for extracting each character image from the serial number image illustrated in FIGS. 6A and 6B will be explained below. It is assumed that the two serial numbers illustrated in FIGS. 6A and 6B have been obtained from different banknotes. These banknotes are notes of the same denomination; however, due to the difference in the year of issuance of the note and the like, a serial number of eight digits has been printed on one banknote as illustrated in FIG. 6A, while a serial number of nine digits has been printed on the other banknote as illustrated in FIG. 6B.

In this case, the paper sheet handling apparatus 10 can process both of the 8-digit serial number and the 9-digit serial number by performing the method explained above with reference to FIGS. 8A to 8C. Specifically, as illustrated in FIG. 8C, the character frame 200c is set so that the first digit and the second digit are included in one character frame, and the character frames 201c are set so as to include the characters in each digit for the third to ninth digits in the arrangement pattern frame. Moreover, if it has been determined as a result of scanning of the arrangement pattern frame on the serial number image that two characters are included in the first character frame 200c, then character images of characters in each digit of the 9-digit serial number can be extracted by dividing the serial number image into character images each including an image of one character. In addition, if only one character is included in the first character frame 200c, character images of the characters in each digit of the 8-digit serial number can be extracted by deleting the margin regions. Then the character recognition process can be carried out by using each extracted character image.

In addition, if the serial number can include characters either in eight digits or in nine digits, an arrangement pattern frame set in accordance with a 9-digit serial number can be used. Specifically, an arrangement pattern frame for which the 9-digit character frame 221 illustrated in FIG. 13B is set in accordance with the 9-digit serial number illustrated in FIG. 6B.

If it is determined as a result of denomination recognition performed by the paper sheet type recognition unit 191 that the banknote is a note on which a serial number of eight digits or nine digits has been printed as illustrated in FIGS. 6A and 6B, then the arrangement pattern frame including the 9-digit character frames 221 illustrated in FIG. 13B is read out from the number attribute information memory unit 131. Then, the arrangement pattern frame is scanned by the character recognition unit 135 on the serial number image and the position of the serial number is searched as explained above with reference to FIGS. 10A and 10B.

If the arrangement pattern frame including the character frames for nine digits has been scanned on the serial number image of the 8-digit serial number, both of the following positions are determined as the appropriate positions for the serial number, i.e., the position in the 9-digit character frame in which the leftmost first digit does not include a character and in which each of the eight characters are included in the character frames for the second to ninth digits, and the position in the 9-digit character frame in which the rightmost ninth digit does not include a character and in which each of the eight characters is included in the character frames for the first to eighth digits. If plural positions have been obtained as the appropriate positions as a result of position search, then the character recognition unit 135 finally determines one of the plural positions, in which the origin is at the leftmost position on the serial number image, as the appropriate position. In other words, the rightmost portion (the portion corresponding to the ninth digit) of the arrangement pattern frame including character frames for nine digits is aligned with the rightmost portion (the portion corresponding to the eight digit) of the 8-digit serial number, and thus the following position is determined as the appropriate position, i.e., the position at which no character is included in the character frame for the first digit and the 8-digit serial number is included in the character frames for the second to ninth digits. Due to this, by determining whether a character is always included in the first digit of the arrangement pattern frame, it can be determined whether the serial number for which the appropriate position has been determined includes eight digits or nine digits.

After the appropriate position is determined, the character recognition unit 135 verifies variation of the minimum luminance value in the region on the serial number image in which the arrangement pattern frame is arranged. Specifically, as illustrated in FIG. 15, the luminance value of the pixel having the minimum luminance value among the plural pixels arranged in the vertical direction is calculated for the region including each character frame 231 and the spacing between each character frame 231, then the calculated luminance value is plotted in the horizontal direction, and thereby a distribution diagram is generated, which illustrates variation of the minimum luminance value. The minimum luminance value becomes low at a position at which each character printed in black is included, while the minimum luminance value becomes high inside the character frame 231 including no character and in the margin region and the like between the character frames 231. In addition, a binary threshold value is calculated on the basis of the sum total of the pixel values of all the pixels included in this region. Then, as illustrated in FIG. 15, it is determined whether a character is included in the first digit by using the threshold value on the distribution diagram for the minimum luminance value. As illustrated in FIG. 15, the minimum luminance value has a value higher than the binary threshold value within the character frame for the first digit, and accordingly, it is determined that no character is included in the character frame for the first digit, i.e., that the serial number includes eight digits.

If it is determined that no character is included in the first digit, character images are extracted from each character frame for the second to ninth digits among the character frames 231 illustrated in FIG. 15. Then, the character recognition process, which uses each character image is performed by the character recognition unit 135. If it is determined that a character is included in the first digit, character images of all the nine characters are extracted and the character recognition process, which uses each character image is carried out.

The method of determining, on the basis of the pixel values, whether the serial number includes eight digits or nine digits is not limited to the above method, and assuming that the serial number includes eight digits, the binary threshold value can also be calculated on the basis of the pixel values of the pixels arranged in the region of the eight digits. In addition, a method can be employed in which no binary threshold value is used, an average value of the pixel values in the character frame region for the first digit is compared with an average value of the pixel values in the character frame region for the second digit, and if the average value for the first digit is higher than the average value for the second digit and if the difference between the average value for the first digit and the average value for the second digit is greater than a predetermined threshold value, it is determined that no character is included in the first digit.

After each character image is extracted, the character recognition process is carried out by using the template data corresponding to each character. Information about the corresponding template data has been stored as the character font identification information in the number attribute information memory unit 131 in association with the type of banknote. If the 8-digit serial number is a serial number including Roman alphabetic characters for the first and eighth digits and Arabic numeric characters for the second to seventh digits, then the character recognition process is carried out by using the template data for Roman alphabetic characters with respect to the first and eighth digits, while with respect to the second to the seventh digits, the character recognition process is carried out by using the template data for Arabic numeric characters. In the case of a 9-digit serial number also, in the similar manner, the character recognition process is carried out by using the template data for Roman alphabetic characters with respect to the digits including Roman alphabetic characters, while with respect to the digits including Arabic numeric characters, the character recognition process is carried out by using the template data for Arabic numeric characters.

Thus, in case of a banknote on which serial numbers of plural types having different number of digits have been printed, character images of each digit can be precisely extracted regardless of the number of digits by setting the arrangement pattern frame in correspondence with the serial number including the largest number of digits among the applicable number of digits, identifying the appropriate position of the arrangement pattern frame, and then determining whether a character is included in each character frame.

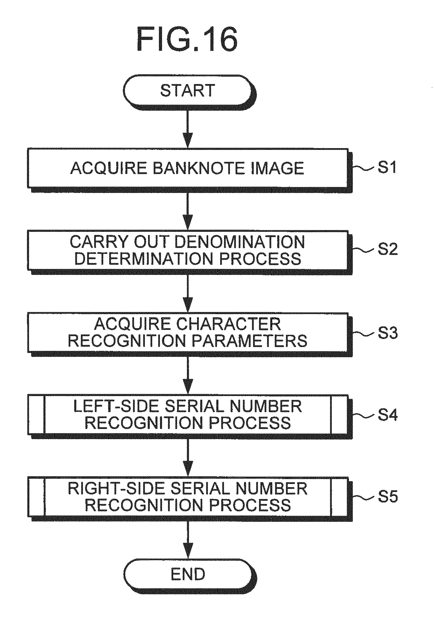

Next, a flow of serial number reading processing performed by the paper sheet handling apparatus 10 will be explained. FIG. 16 is a flowchart of a process procedure of the serial number reading process performed by the paper sheet handling apparatus 10. First, the paper sheet recognition sensor unit 11 acquires a banknote image of a banknote which is being transported by the paper sheet transporting unit 12 (Step S1). Then, a denomination recognition process of identifying the type of the banknote is performed by the paper sheet type recognition unit 191 by using the banknote image (Step S2). For example, the type of the banknote including the country, which has issued the banknote, the denomination, and the like, is identified.

Next, the number extraction conditions, the character font identification information, and the number recognition conditions, which have been stored as information related to the character recognition processing in the number attribute information memory unit 131, are acquired on the basis of the type of the banknote obtained as a result of denomination recognition processing (Step S3). Then, the character recognition process is carried out by the character recognition unit 135 on the left-side serial number on the basis of these pieces of information (Step S4). Subsequently, the character recognition process is carried out on the right-side serial number in the similar manner (Step S5).

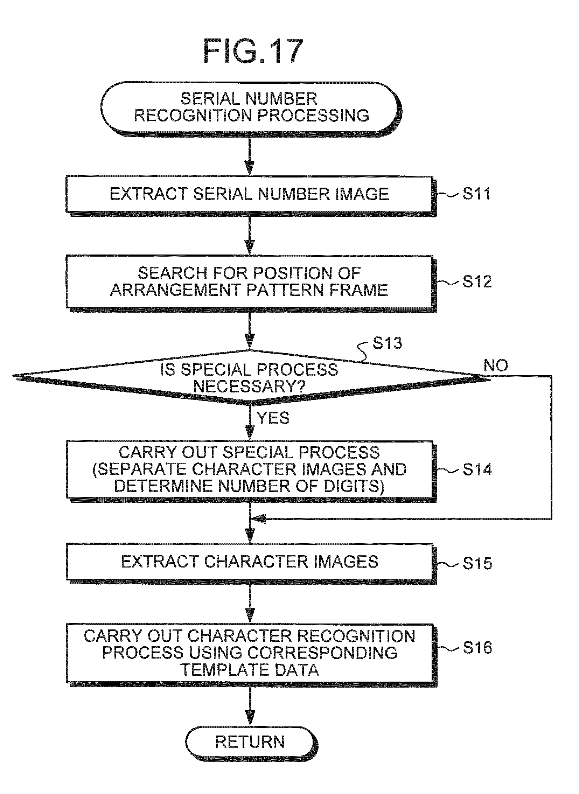

FIG. 17 is a flowchart of processing contents of the serial number recognition processing (Steps S4 and S5) illustrated in FIG. 16. First, the image processing unit 134 extracts a serial number image from the banknote image on the basis of the information about the printing position of the serial number, which is included in the number extraction conditions (Step S11).

Next, the character recognition unit 135 scans the arrangement pattern frame included in the number extraction conditions on the serial number image, and searches for an appropriate position at which the characters of each digit of the serial number are included in each character frame included in the arrangement pattern frame (Step S12).

After the appropriate position of the arrangement pattern frame is determined, it is determined whether it is necessary to perform a special process for extracting each character image from the serial number image on the basis of the information included in the number recognition conditions (Step S13). If the special processing is necessary (Yes at Step S13), then the special process is performed (Step S14).

The special processing at this step is the processing necessary for a specific serial number corresponding to the type of the banknote, i.e., the type of the serial number. For example, if the process has been performed by using the arrangement pattern frame in which two characters are included in one character frame 200c and one character frame 200d as illustrated in FIGS. 8A to 8C and 9, the special processing corresponds to the processing of separating and extracting the character images 104 including each character from the partial images 203 obtained by applying the character frames 200c and 200d, as illustrated in FIGS. 12A to 12C. In addition, if it not fixed whether the serial number has eight digits or nine digits and if the process has been performed by applying the arrangement pattern frame including the 9-digit character frame as illustrated in FIG. 13B, the special processing corresponds to the process of determining whether a character is included in the leftmost first digit of the arrangement pattern frame, i.e., processing for determining which of eight digits or nine digits the number of digits of the serial number is.

After performing the special process in the above manner, character images of each digit of the serial number are extracted from the serial number image (Step S15). Moreover, if the special processing is not necessary, the special process is not performed (No at Step S13), and then character images of each digit of the serial number are extracted (Step S15).

After each character image is extracted, the character recognition process is performed by using the template data previously prepared in correspondence with the font and the character type of the characters included in each character image on the basis of the character font identification information (Step S16). Specifically, with respect to a serial number including Arabic alphabetic characters and Arabic and Indian numeric characters, the character recognition process is performed by using the template data for Arabic alphabetic characters and Arabic and Indian numeric characters, while with respect to a serial number including Roman alphabetic characters and Arabic numeric characters, the character recognition process is performed by using the template data for Roman alphabetic characters and Arabic numeric characters. In addition, if different fonts are used for characters of the same character type, the character recognition process is performed by using the template data which has been generated with the corresponding fonts.

After the processing for reading the left-side serial number and the right-side serial number included in the banknote is completed, the following process may be performed by a multiple number collation function 1362 of the collation unit 136 in some cases, i.e., processing for finally determining the result of character recognition of the serial number by verifying that the left-side serial number and the right-side serial number match each other. In this processing, as illustrated in FIGS. 14A and 14B, if "0" (zero) does not exist in the Abjad numeric character in the left-side serial number illustrated in FIG. 14A while "0" (zero) has been printed in Arabic numeric character in the right-side serial number illustrated in FIG. 14B, the comparison between the serial numbers is performed after adding "0" to the applicable digit of the result of character recognition of the Abjad numeric characters included in the left-side serial number. Thus, information describing that Abjad numeric characters have been used, with which "0" (zero) is not printed in specific digits, has been also stored as the number recognition condition in the number attribute information memory unit 131 in association with the type of the banknote.

After the result of character recognition on the serial number is determined, the counterfeit note number collation function 1361 of the collation unit 136 performs a collation process of verifying whether the obtained serial number is a serial number of a counterfeit note by using the determined result. In some cases, process of transmitting the results of character recognition on the serial number to an external apparatus such as a host apparatus and a process of storing the serial number character recognition results in an external memory device are performed through the communication I/F unit 18.

In the present embodiment, examples of the serial numbers include numbers printed by using Cyrillic characters used in Russian language, Arabic alphabetic characters, Abjad numeric characters, and Arabic and Indian numeric characters used in Arabic language, and the like apart from Roman alphabetic characters and Arabic numeric characters. However, the present embodiment is not limited to these, and the present embodiment can support various character types in correspondence with the language used for the serial number. Similarly, in case of the fonts also, the present embodiment can support various fonts. Specifically, information about the character type and the font of the characters used for each digit of the serial number and template data generated by using the corresponding character type and fonts have been previously prepared, the information and the template data have been stored in accordance with the type of the banknote, and thereby the character recognition can be carried out by using the corresponding template data on the basis of the results of recognition of the type of the banknote.

In addition, in the present embodiment, an example of a case is explained where one character frame of an arrangement pattern frame includes two characters for the first and second digits. However, the present embodiment is not limited to this, and can employ a configuration in which the character frame can be set to include three or more characters or the character frame including plural characters can be set for other digits.

In addition, in the present embodiment, the example of a case is explained where if an 8-digit serial number or a 9-digit serial number has been printed, it is determined whether a character is included in the character frame for the leftmost first digit of the arrangement pattern frame. However, the present embodiment is not limited to this. Regardless of the number of digits of the serial number, character images of each character included in the serial number can be extracted in the similar manner for a serial number that does not include a character in the digits other than the first digit, or for a serial number for which a character frame for two digits or more does not include a character in some cases, and the like.

In addition, in the present embodiment, an example of a case is explained where the character recognition results are determined by comparing the results obtained as a result of character recognition on both the left-side and right-side serial numbers. However, the present embodiment is not limited to this, and depending on the setting, the present embodiment can employ a configuration in which character recognition is carried out only on one of the left-side and right-side serial numbers, or results of the character recognition on both the left-side and right-side serial numbers can be stored, or such results can output to an external apparatus.

As explained above, according to the present embodiment, even if the character size and the position of the characters constituting the serial number vary in correspondence with the fonts, each character image can be extracted by setting the character frames so that each character frame includes the region, which can be occupied by each such character. In addition, even if a part of the region, which can be occupied by a character is overlapped by plural digits, character images of the characters in each digit of the serial number can be precisely extracted by setting one character frame including such characters together, extracting a partial image including plural characters, and extracting character images each including one such character from the partial image.

In addition, even if serial numbers of different number of digits has been printed on one banknote, character images of characters in each digit of the serial numbers can be precisely extracted by applying arrangement pattern frames corresponding to each serial number. Furthermore, even if the number of digits of the printed serial numbers is not fixed, character images can be precisely extracted in accordance with the number of digits of each serial number by determining the position of the serial number by using the arrangement pattern frame set in correspondence with the serial number having the largest number of digits and by extracting character images only at the positions of the digits including a character.

In addition, even if the left-side and right-side serial numbers have been printed in different fonts and character types and even if the digits of one serial number are printed in different fonts and character types, character recognition can be precisely performed with previously preparing template data for the corresponding fonts and character types and by performing character recognition on each character image by using the corresponding template data.

The paper sheet handling apparatus 10 is capable of reading serial numbers of various paper sheets by extracting character images of characters in each digit of the serial numbers by applying the corresponding arrangement pattern frames according to the type of the banknote and by performing character recognition by using the corresponding template for the font and character type.

### INDUSTRIAL APPLICABILITY

As explained above, the paper sheet serial number reading system and the paper sheet serial number reading method according to the present invention are useful in performing character recognition on various paper sheets by precisely extracting character images of characters in each digit of serial numbers from paper sheet images obtained by capturing an image of the paper sheets.

### EXPLANATIONS OF LETTERS OR NUMERALS

- 10: Paper sheet handling apparatus
- 11: Paper sheet recognition sensor unit
- 12: Paper sheet transporting unit
- 13: Number recognition unit
- 14: Display unit
- 15: Operation unit
- 16: ROM
- 17: RAM
- 18: Communication I/F unit
- 19: Control unit
- 100: Banknote image
- 101: Left-side serial number
- 102: Right-side serial number
- 103: Serial number image
- 104: Character image
- 131: Number attribute information memory unit
- 132: Authentication condition memory unit
- 133: Counterfeit note number memory unit
- 134: Image processing unit
- 135: Character recognition unit
- 136: Collation unit
- 191: Paper sheet type recognition unit
- 192: Authentication unit
- 200a to 200d, 201a to 201d, 211, 221, 231: Character frame
- 202, 212, 222, 232: Origin

## Claims

1. A paper sheet serial number reading system that reads a serial number printed on a paper sheet by using a paper sheet image, the paper sheet serial number reading system comprising:
a paper sheet transporting unit that transports a paper sheet;
a paper sheet recognition sensor unit that acquires a paper sheet image of the paper sheet transported by the paper sheet transporting unit and recognizes a type of the paper sheet by using the paper sheet image;
a memory unit in which number extraction conditions including position information of plural serial numbers included in the paper sheet image and character font recognition information including information related to a font and a character type of each serial number are stored in association with the types of the paper sheets; and
a character recognition unit that extracts character images of each digit of the serial number from the paper sheet image on the basis of the number extraction condition by referring to the memory unit on the basis of the type of the paper sheet recognized by the paper sheet recognition sensor unit and performs character recognition on each character image by using corresponding template data on the basis of the character font identification information.

2. The paper sheet serial number reading system according to claim 1, wherein when a serial number of which at least one of the font and the character type is different is included in the serial numbers included in the paper sheet image, the character recognition unit performs character recognition on each serial number on the basis of the character font identification information by using template data generated by using a corresponding font and character type.

3. The paper sheet serial number reading system according to claim 1 or 2, wherein a first serial number in which printing of a specific character has been omitted and a second serial number in which the specific character has been printed without omitting are included in the paper sheet image, the paper sheet serial number reading system further comprising:
a collation unit that compares and collates, when the specific character is included in a result of character recognition on the second serial number as a result of the character recognition performed by the character recognition unit, results of character recognition on the first serial number and the second serial number after performing a process of complementing the result of character recognition on the first serial number by adding the specific character to the result.

4. The paper sheet serial number reading system according to claim 1, 2, or 3, wherein when at least one of a character size and a character position varies for different characters in plural digits adjacent to each other in the serial number included in the paper sheet image, the character recognition unit extracts an image included in each character frame by determining a position of the serial number by applying an arrangement pattern frame constituted by one character frame, which is set for the digits so as to include all characters in the digits even if the position and the size of the character varies for different characters in each digit of the digits, and another character frame set for other digits so as to include characters in the other digits only, separates an image extracted by applying one character frame set for the digits into images for each digit and performs character recognition on each obtained image as the character image.

5. The paper sheet serial number reading system according to claim 4, wherein the character recognition unit specifies a pixel having a minimum luminance value among plural pixels arranged in a direction perpendicular to an arrangement direction of the digits, from an image extracted by applying one character frame set for the digits, and specifies a boundary between characters on the basis of variation of the minimum luminance value in a direction parallel to the arrangement direction of the digits, and separates each character from another.

6. The paper sheet serial number reading system according to claim 1, 2, or 3, wherein when at least one of a character size and a character position varies for different characters in plural digits adjacent to each other in the serial number included in the paper sheet image, the character recognition unit extracts an image included in each character frame by determining a position of the serial number by applying an arrangement pattern frame constituted by one character frame set for the digits so as to include all characters in the digits even if the position and the size of the character vary for different characters in each digit of the digits, and another character frame set for other digits so as to include characters in the other digits only, and performs character recognition on the image extracted by applying one character frame set for the digits by using template data previously generated in correspondence with the number of digits of the digits.

7. A paper sheet serial number reading system that reads a serial number printed on a paper sheet by using a paper sheet image, the paper sheet serial number reading system comprising:
a paper sheet transporting unit that transports a paper sheet;
a paper sheet recognition sensor unit that acquires a paper sheet image of the paper sheet being transported by the paper sheet transporting unit and recognizes a type of the paper sheet by using the paper sheet image;
a memory unit in which a number extraction condition including information related to a position of plural serial numbers included in the paper sheet image and information related to an arrangement pattern frame for which positions of characters in each digit of a serial number having a largest number of digits among serial numbers, which are possibly included in the paper sheet have been set, and information related to template data to be used for character recognition of each serial number have been stored in association with the types of the paper sheets; and
a character recognition unit that extracts character images of each digit of the serial number from the paper sheet image on the basis of the number extraction condition by referring to the memory unit on the basis of the type of the paper sheet recognized by the paper sheet recognition sensor unit and performs character recognition on each character image by using corresponding template data on the basis of the information related to the template data,
wherein the character recognition unit determines a position of the serial number by applying the arrangement pattern frame stored in the memory unit, determines whether a character is included at a character position of each digit of the serial number at the determined position of the serial number, and extracts each character image at the character position having been determined to include a character.

8. A paper sheet serial number reading method for reading a serial number printed on a paper sheet by using a paper sheet image, the paper sheet serial number reading method comprising:
transporting a paper sheet by using a paper sheet transporting unit;
recognizing a paper sheet by a paper sheet recognition sensor unit by acquiring a paper sheet image of the transported paper sheet and recognizing a type of the paper sheet by using the paper sheet image;
reading information, by referring to a memory unit on the basis of the type of the paper sheet recognized by the paper sheet recognition sensor unit, including a number extraction condition that includes information related to a position of plural serial numbers included in the paper sheet image, and character font recognition information that includes information related to a font and a character type of each serial number;
extracting character images of characters of respective digits of the serial number from the paper sheet image on the basis of the number extraction condition; and
performing character recognition on each character image extracted at said extracting character images by using corresponding template data on the basis of the character font identification information.

9. The paper sheet serial number reading method according to claim 8, wherein at said performing, when a serial number having at least one of the font and the character type different is included in the serial numbers included in the paper sheet image, each serial number is recognized by character recognition performed on the basis of the character font identification information by using template data generated by using a corresponding font and a character type.

10. The paper sheet serial number reading method according to claim 8 or 9, wherein a first serial number in which printing of a specific character has been omitted and a second serial number in which the specific character has been printed without omitting are included in the paper sheet image, the paper sheet serial number reading method further comprising:
collating serial numbers by comparing and collating results of character recognition on the first serial number and the second serial number after performing a process of complementing the result of character recognition on the first serial number by adding the specific character thereto when the specific character is included in the result of character recognition on the second serial number as a result of the character recognition at said performing character recognition.

11. The paper sheet serial number reading method according to claim 8, 9, or 10, wherein said extracting character image includes
determining a position of a serial number included in the paper sheet image, when at least one of a character size and a character position varies for different characters in plural digits adjacent to each other in the serial number, by applying an arrangement pattern frame constituted by one character frameset for the digits so as to include all characters in the digits even if the position and the size of the characters vary for different characters in each digit of the digits, and another character frame set for other digits so as to include characters in the other digits only;
extracting partial images included in each character frame at the position determined at said determining a position of a serial number; and
separating a partial image extracted at said extracting partial images, by applying one character frame set for the plurality of digits, into images for each digit and titling each obtained image a character image.

12. The paper sheet serial number reading method according to claim 11, wherein said separating further includes determining a boundary between characters on the basis of variation of the minimum luminance value in a direction parallel to the arrangement direction of the plurality of digits by determining a pixel having a minimum luminance value among plural pixels arranged in a direction perpendicular to an arrangement direction of the digits, from an image extracted by applying one character frame set for the digits.

13. The paper sheet serial number reading method according to claim 8, 9, or 10, wherein said extracting character images includes
determining a position of a serial number, when at least one of a character size and a character position varies for different characters in plural digits adjacent to each other in the serial number included in the paper sheet image, by applying an arrangement pattern frame constituted by one character frame set for the digits so as to include all characters in the digits even if the position and the size of the character vary for different characters in each digit of the digits, and another character frame set for other digits so as to include characters in the other digits only; and
extracting partial images included in each character frame at the position determined at said determining a position of a serial number, and
the performing character recognition includes performing character recognition on the partial image extracted at said extracting partial images by applying one character frame set for the digits by using template data previously generated in correspondence with the number of digits of the digits.

14. A paper sheet serial number reading method for reading a serial number printed on a paper sheet by using a paper sheet image, the paper sheet serial number reading method comprising:
transporting a paper sheet by using a paper sheet transporting unit;
recognizing a paper sheet, by using a paper sheet recognition sensor unit, by acquiring a paper sheet image of the transported paper sheet and recognizing a type of the paper sheet by using the paper sheet image;
reading information, by referring to a memory unit on the basis of the type of the paper sheet recognized by the paper sheet recognition sensor unit, including a number extraction condition that includes information related to a position of plural serial numbers included in the paper sheet image, and information related to an arrangement pattern frame for which positions of characters in each digit of a serial number having a largest number of digits among serial numbers, which are possibly included in the paper sheet have been set, and information related to template data to be used for character recognition of each serial number;
extracting a serial number image from the paper sheet image on the basis of the number extraction condition;
determining a position of the serial number on the serial number image by applying the arrangement pattern frame information;
determining whether a character is included at each position of each character in the digits of the serial number in the determined position of the serial number;
extracting each character image from the position for which it has been determined that a character is included; and
performing character recognition on each extracted character image by using corresponding template data.
